(19) **Europäisches Patentamt / European Patent Office / Office européen des brevets**

(11) **EP 1 985 640 A1**

(12) # EUROPEAN PATENT APPLICATION
published in accordance with Art. 158(3) EPC

(43) Date of publication:
**29.10.2008 Bulletin 2008/44**

(51) Int Cl.:
*C08F 290/12* (2006.01)   *G02B 1/04* (2006.01)

(21) Application number: **07707092.8**

(22) Date of filing: **19.01.2007**

(86) International application number:
**PCT/JP2007/050804**

(87) International publication number:
**WO 2007/083749 (26.07.2007 Gazette 2007/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.01.2006 JP 2006013038**

(71) Applicant: **Hitachi Chemical Co., Ltd. Tokyo 163-0449 (JP)**

(72) Inventors:
• **KOBAYASHI, Shingo**
 **- (JP)**

• **TOMIYAMA, Takeo**
 **- (JP)**
• **YOSHIDA, Akihiro**
 **- (JP)**
• **TANAKA, Syouko**
 **- (JP)**

(74) Representative: **HOFFMANN EITLE Patent- und Rechtsanwälte Arabellastrasse 4 81925 München (DE)**

(54) **RESIN COMPOSITION AND OPTICAL MEMBER USING CURED PRODUCT OF SUCH RESIN COMPOSITION**

(57) An object of the present invention is to provide a resin composition having high optical transparency, and excellent heat resistance, light resistance and mechanical properties when it cures. To attain the object, a heat or photo-curable resin composition comprises: (A) a low molecular wight acrylic resin obtained by carrying out a polymerization of (a) an epoxy group-containing (meth)acrylate and (b) an unsaturated compound having one polymerizable unsaturated bond in the molecule to obtain a copolymer having a weight average molecular weight of 1,000 to 10,000, and then reacting the copolymer with (c) an unsaturated carboxyl acid; a heat or photo-polymerizable monomer having at least one heat or photo curable unsaturated double bond in the molecule; and (C) a radical polymerization initiator.

EP 1 985 640 A1

**Description**

Technical Field

The present invention relates to a resin composition having excellent optical transparency, heat resistance, light resistance and mechanical properties when it cures. The present invention further relates to an optical material for an optical semiconductor element such as a lens, adhesive, optical waveguide, light emitting diode (LED), phototransistor, photo diode and solid state image sensor which uses the cured composition.

Background Art

Conventionally, acrylic resins having excellent transparency and light resistance, such as PMMA, have been mainly used for optical materials. However, PMMA has a problem that the heat resistance is not enough, because it is a thermoplastic resin that largely contracts when it cures. On the other hand, resins for optical materials in photo and electronic device fields are required to have heat resistance and machine properties in a packaging process of electro substrates or at a high operating temperature, and epoxy resins have been mainly used. However, in recent years, high strengthen laser light, blue light and near-ultraviolet light are widely used in both photo and electronic device fields, and resins having excellent transparency, heath resistance, light resistance and machine properties at once are required.

Although epoxy resins generally have high transparency in visible region, transparency is not sufficiently obtained in ultraviolet and near-ultraviolet region. Among them, epoxy resins formed of alicyclic bisphenol A diglycidyl ether etc. have high transparency in comparison with other resins, but have a problem that it is easy to be colored by heat or light. To overcome this problem, Japanese Patent Application Laid Open Nos. 2003-171439 and 2004-75894 disclose a method for reducing impurities contained in alicyclic bisphenol A diglycidyl ether which is one the cause of coloring. However, further improvements have been required for heat resistance and ultraviolet coloring resistance.

Further, in recent years, Japanese Patent Application Laid Open No. 2004-2810 discloses that a silicone having excellent transparency and colorability is used for optical materials. However, there is a concern that silicone resins generally have low elasticity, are difficult to deal with, and have high linear coefficient expansion and low adhesiveness etc.

Disclosure of the Invention

Considering above, it is an object of the invention to provide a resin composition having high optical transparency, less contraction, and excellent heat resistance, light resistance and mechanical properties when it cures, and an optical material using the composition.

That is, the present invention relates to a composition characterized in the following (1)-(5).

(1) A heat or photo curable resin composition comprising: (A) a low molecular weight acrylic resin obtained by carrying out a polymerization of (a) an epoxy group-containing (meth)acrylate and (b) an unsaturated compound having one polymerizable unsaturated bond in the molecule to obtain a copolymer having a weight average molecular weight of 1,000 to 10,000, and then reacting the copolymer with (c) an unsaturated carboxyl acid; (B) a heat or photo-polymerizable monomer having at least one heat or photo curable unsaturated double bond in the molecule; and (C) a radical polymerization initiator.

(2) The resin composition of (1), wherein the molar ratio of the (a) component to the (b) component in the copolymer ((a) component: (b) component (% by mole)) is 10-70:30-90.

(3) The resin composition of (1) or (2), wherein equivalent ratio of the epoxy group of the copolymer to the carboxyl group of the unsaturated carboxyl acid (epoxy group/carboxyl group) is in the range of 0.95-1.1 in the low molecular weight acrylic resin.

(4) The resin composition of any one of (1) to (3), wherein the (a) epoxy group- containing (meth)acrylate includes glycidyl(meth)acrylate.

(5) An optical material obtained by curing the resin composition of any one of (1) to (4).

The resin composition of the present invention has high optical transparency, low contraction, and excellent light resistance, heat resistance and machine properties when it cures, which improves the life and reliability of optical materials obtained by curing the resin composition.

This specification is claiming the priority of Japanese Patent Application No. 2006-013038 filed on January 20, 2006, this disclosure of which is expressly incorporated herein by reference in its entirety.

In this specification, the word "(meth)acrylic copolymer" refers to an acrylic copolymer and the corresponding methacrylic copolymer, and the word "(meth)acrylate" refers to an acrylate and the corresponding methacrylate.

Best Mode for Carrying out the Invention

The present invention is described below in detail.

The resin composition of the present invention comprises: (A) a low molecular weight acrylic resin obtained by carrying out a polymerization of (a) an epoxy group-containing (meth)acrylate and (b) an unsaturated compound having one polymerizable unsaturated bond in the molecule to obtain a copolymer having a weight average molecular weight of 1,000 to 10,000, and then reacting the copolymer with (c) an unsaturated carboxyl acid; (B) a heat or photo-polymerizable monomer having at least one heat or photo curable unsaturated double bond in the molecule; and (C) a radical polymerization initiator as essential components.

As disclosed above, PPMA is known as an acrylic resin which is a highly transparent optical material. However, a problem is that this material has low heat resistance since it is a thermoplastic resin which substantially contracts when it is cured. The present inventors have found that the use of an acrylic oligomer decreases the contraction caused by curing, and the introduction of a functional group into an oligomer, that is, reacting an epoxy group-containing (meth) acrylic copolymer with an unsaturated carboxyl acid, makes the cross-linkage thicker so as to improve heat resistance. Further, with respect to transparency, the use of epoxy group-containing (meth)acrylic copolymer having a weight average molecular weight of 1,000 to 10,000 improves the compatibility with a heat or photo curable monomer to obtain a transparent curing material.

The (a) epoxy group-containing (meth) acrylate of the present invention includes, for example, glycidyl(meth) acrylate, 3,4-epoxy cyclohexylmethyl(meth)acrylate, 4-hydroxybutyl(meth)acrylate glycidylether. Among them, glycidyl (meth)acrylate is preferable.

The (b) unsaturated compound having one polymerizable unsaturated bond in the molecule, is not limited if the compound is other than the (a) epoxy group-containing(meth)acrylate, but includes, for example, methyl(meth) acrylate, ethyl(meth)acrylate, n-propyl(meth)acrylate, t-butyl(meth)acrylate, isobutyl(meth)acrylate, ethylhexyl(meth) acrylate, stearyl(meth)acrylate, lauryl(meth)acrylate, tridecyl(meth)acrylate, ethoxyethyl(meth)acrylate, butoxyethyl (meth)acrylate, 2-hydroxyethy(meth)acrylate, 2-hydroxybutyl(meth)acrylate, 2-hydroxypropyl(meth)acrylate, 2-methoxyethoxy(meth)acrylate, 2-ethoxyethoxy(meth)acrylate, methoxydiethyleneglycol(meth)acrylate, ethoxydiethylene glycol (meth)acrylate, methoxytriethylene glycol(meth)acrylate, buthoxy triethylene glycol(meth)acrylate, methoxy propylene glycol (meth)acrylate, pyreneoxide adduct (meth)acrylate, octafluoropentyl(meth)acrylate, N,N-dimethylaminoethyl (meth)acrylate, N,N-diethylaminoethyl(meth)acrylate, cyclohexylmono(meth)acrylate, mono(meth)acrylate having a tricyclodecan structure, which can be used alone or in combination of more than two.

The component (a) and component (b) can be a copolymer by carrying out polymerization by a known method such as a solution polymerization method in the presence of a radical polymerization initiator. An example of polymerization is: a solvent is poured into a reaction vessel, heated to 140°C while stirring under a pressure of 0.15MPa (1.5kgf/cm$^2$) in a nitrogen gas atmosphere. At 140 °C a mixed solution of (a) an epoxy group-containing (meth)acrylate, (b) an unsaturated compound having one polymerizable unsaturated bond, and a radical polymerization initiator is dropped uniformly into the vessel, and the reaction is maintained after dropping the initiator so as to obtain a desired copolymer. The radical heat polymerizable initiator includes a compound generally used for radical polymerization, such as an azo based initiator and peroxide based initiator. The azo based nitiators include, for example, azobisisobutylonitorile, azobis-4-methoxy-2,4-dimethyl valeronitorile, and azobiscyclohexanone-1-carbonitorile, azodibenzoyl. The peroxide based initiators include benzoyl peroxide, lauroyl peroxide, di-t-butyl peroxy hexahydro telephthalate, t-butylperoxy-2-ethylhexanoate, 1,1-t-butylperoxy-3,3,5-trimethylcyclohexane, t-butylperoxyisopropylcarbonate, and di-t-hexylperoxide.

The molar ratio of the (a) component is preferably 10-70 % by mole, and more preferably 20 to 60 % by mole based on the total mole of the (a) component and the (b) component. If the ratio is less than 10 % by mole, the bending strength of the resin composition tends to decrease. If the ratio exceeds 70 % by mole, the bending strength of the resin composition tends to decrease.

The molar ratio of the (b) component is preferably 30 to 90 % by mole, and more preferably 40 to 80 % by mole based on the total number of mole of the (a) component and the (b) component. If the ratio is less than 30 % by mole, the bending strength of the resin composition tends to decrease. If the ratio exceeds 90 % by mole, the bending strength of the resin composition tends to decrease.

In summary, the blending ratio of the (a) component to the (b) component in the copolymer is preferably 10-70 % by mole:30-90 % by mole.

The weight average molecular weight of the copolymer is preferably in the range of 1,000 to 10,000, and more preferably 2,000 to 9,000. If the weight is less than 1,000, the mechanical property (bending strength) and optical properties of the resin composition tends to decrease. If the weight is over 10,000, the copolymer tends to have difficulty in being dissolved in a heat or photo curable monomer. A method for producing a copolymer having a weight average molecular weight of 1,000 to 10,000 includes a method using a chain transfer agent, a method with excess radical polymerization initiator, and a method conducting a reaction at higher temperature. Weight average molecular weight of the present invention is determined by gel permeation chromatography (GPC) with a calibration curve of polystyrene standard. The measurement condition is the following:

<GPC conditions>

> Equipment: Hitachi L-6000 type (Hitachi, Ltd.)
> Column: total three columns: Gelpack GL-R420; Gelpack GL-R430; and
> Gelpack GL-R440 manufactured by Hitachi, Ltd.
> Eluant: tetrahydrofuran
> Temperature: 40 °C
> Flow: 1.75ml/min
> Detector: L-3300RI (Hitachi, Ltd.)

The (A) low molecular weight acrylic resin of the present invention can be obtained by further reacting the copolymer described above with (c) an unsaturated carboxyl acid. The (c) unsaturated carboxyl acid which can be used, is not limited, but includes, for example, (meth)acrylic acid and dimer thereof, caprolacton modified (meth)acrylic acid, a compound obtained by ring-opening polymerization of hydroxyl group containing (meth)acrylate and anhydrous carboxyl acid, and β-acryloyloxyethylhydrodiensuccinate. Among them, (meth)acrylate is preferable.

The copolymer and the unsaturated carboxyl acid is preferably mixed so that the equivalent ratio of the epoxy group of the copolymer to the carboxyl group of the unsaturated carboxyl acid is 0.95 to 1.1 (epoxy group/carboxyl group). If the ratio is less than 0.95, the machine properties of the cured material tend to decrease due to the excess residue of the unsaturated carboxyl acid. If the ratio exceeds 1.1, the curing property and storage stability of the resin composition tend to deteriorate as a whole. The reaction can be conducted in the presence of a basic catalyst such as N,N'-diethylcyclohexylamine, triethylamine and triethanolamine, or a phosphorus catalyst such as triphenylphosphine at 105 °C for 8 to 10 hours.

Further, if the (A) low molecular weight acrylic resin is purified, the photo resistance and heat-coloring resistance of the curing material can be improved. The purification method can be a well known purification method, for example, re-precipitation. An example of the purification is: (A) low molecular weight acrylic resin solution is dropped into a poor solvent (the ratio of methanol to water is 50:50) which has ten times volume of the component (A) while stirring. After dropping the resin solution, a precipitation obtained by removing a supernatant liquid is dissolved to a solvent, the obtained solvent is dehydrated by using magnesium sulfate and filtered, and then the solvent is removed.

As the (B) heat or photo-polymerizable monomer having at least one heat or photo curable unsaturated double bond in the molecule, a compound with no ether structure is preferable in view of heat resistance, and a compound with less than two aromatic rings is preferable in view of light resistance. The component (B) includes, for example, glycidyl (meth)acrylte, 3,4-epoxycyclohexylmethyl(meth)acrylate, 4-hydroxybutyl(meth)acrylate glycidylether, methyl(meth)acrylate, ethyl(meth)acrylate, n-propyl(meth)acrylate, t-butyl(meth)acrylate, isobutyl(meth)acrylate, ethylhexyl(meth)acrylate, stearyl(meth)acrylate, lauryl(meth)acrylate, tridecyl(meth)acrylate, ethoxyethyl(meth)acrylate, buthoxyethyl(meth)acrylate, 2-hydroxyethyl(meth)acrylate, 2-hydroxybutyl(meth)acrylate, 2-hydroxypropyl(meth)acrylate, 2-methoxyethoxy(meth)acrylate, 2-ethoxyethoxy(meth)acrylate, pyrenoxide adduct (meth)acrylate, octafluoropentyl(meth)acrylate, N,N'-dimethylaminoethyl(meth)acrylate, N,N'-diethylaminoethyl(meth)acrylate, cyclohexylmono(meth)acrylate, mono(meth)acrylate, having tricyclodecane, ethyleneglycoldi(meth)acrylate, methanedioldi(meth)acrylate, 1,2-ethanedioldi(meth)acrylate, 1,3-butanedioldi(meth)acrylate, 1,3-propanedioldi(meth)acrylate, 1,4-butanedioldi(meth)acrylate, 1,5-pentanedioldi(meth)acrylate, 1,6-hexanedioldi(meth)acrylate, 1,7-heptanedioldi(meth)acrylate, 1,8-octanedioldi(meth)acrylate, 1,9-nonanedioldi(meth)acrylate, 1,10-decanedioldi(meth)acrylate, 2-butyl-2-ethyl-1,3-propanedioldi(meth)acrylate, 3-methyl-1,5-pentanedioldi(meth)acrylate, neopentyldi(meth)acrylate, dimetyloltricyclodecanedi(meth)acrylate, zinc di(meth)acrytate, 2-(meth)acryloyloxyethyl acid phosphate, bifunctional (meth)acrylate such as caprolacton modified tricyclodecanedimethanoldi(meth)acrylate, which can be used alone or in combination of more than two.

As the (C) radical polymerization initiator of the present invention, a heat polymerization initiator or photo polymerization initiator can be used.

As the heat polymerization initiator, radical polymerization initiators that can be generally used for radical heat polymerization, such as an azo initiator and peroxide initiator, can be used. The azo initiators include, for example, azobisisobutylnitorile, azobis-4-methoxy-2,4-dimethylvaleronitorile, azobiscyclohexanone-1-carbonitorile, azodibenzoyl. The peroxide initiator include peroxide bezoyl, peroxide lauroyl, di-t-butylperoxyhexahydroterephthalate, t-butyperoxy-2-ethylhexanoate, 1,1-t-butylperoxy-3,3,5-trimethylcyclohexane, t-butylperoxypropylcarbonate, di-t-hexylperoxide are exemplified. However, this cross-linking reaction tends to be difficult to achieve. Therefore, the use of a plurality of radical heat polymerization initiators having different half-life temperatures is effective in achieving the reaction. For example, the reaction can be achieved by heating for 5 hours at 60 °C with lauroyl peroxide and heating for 1 hour at 120 °C with t-butylperoxyisopropylcarbonate.

The photo polymerization initiator is not limited so long as it can effectively absorb ultraviolet rays emitted from an industrial radiation equipment, be activated, and does not yellow the curing resin. The photo polymerization initiator includes, for example, 1-hydroxycyclohexylphenylketone, 2,2-dimethoxy-1, 2-diphenylethane-1-one, 2-hydroxy-methyl-1-phenyl-propane-1-one, oligo(2-hydroxy-2-methyl-1-(4-(1-methylvinyl)phenyl)propanone), a mixture of oligo(2-hydroxy-2-methyl-1-(4-(1-methylvinyl)phenyl)propanone) and tripropylene glycole diacrylate, and a mixture of oxy-phenyl-acetic acid 2-(2-oxo-2-phenyl-acetoxy-ethoxy)-ethylester and oxy-phenyl-acetic acid 2-(2-hydroxy-ethoxy)-ethylester.

The amount of the component (B) of the present invention is preferably from 10 to 70 parts by weight, and more preferably from 20 to 60 parts by weight based on 100 parts by weight of the component (A). In case of less than 10 parts by weight, it tends to be difficult to deal with the resin composition since its viscosity is too high. On the other hand, in case of more than 70 parts by weight, it tends to decrease the bending strength of the cured composition.

The amount of the component (C) of the present invention is preferably from 0.01 to 5 parts by weight, more preferably from 0.1 to 1 parts by weight based on 100 parts by weight of the total amount of the component (A) and (B). In case of more than 5 parts by weight, the cured composition tends to be colored by heat or near ultraviolet ray. In case of less than 0.01 parts by weight, the resin composition tends to be difficult to cure. In case a plurality of heat radical polymerization initiators having a different half life are used, the total amount of the initiators is also preferably within the above range.

The resin composition of the present invention may include, for example, a light stabilizer such as hindered amines, anti-oxidant such as a phenolic or phosphorous anti-oxidant, ultraviolet absorber, inorganic filler, organic filler, coupling agent, polymerization inhibitor. From the view of formability, a mold release agent, plasticizer, antistatic agent or flame retardant can be contained in the composition.

The method for producing an optical material by using the resin composition of the present invention comprises: pouring the resin solution into a desired case, potting or die, and curing the resin solution with heat or light. Further, to avoid uncured resin or colored resin, it is preferable to bubble nitrogen in advance to lower the oxygen concentration in the resin composition.

Although the condition for curing the resin with heat or light depends on the kind, combination or amount of the (B) heat or photo-polymerizable monomer, the condition is not particularly limited if the resin composition is finally cured. In case of heat curing, the condition is that the temperature is from 60 to 150 °C and the time is preferably from 1 to 5 hours. Further, it is preferable to gradually increase the curing temperature to lower the interior stress arising from a rapid curing reaction.

As discussed above, the resin composition of the present invention has high optical transparency, and excellent heat resistance, light resistance and machine properties when it is cure. The cured composition can be used for an optical material, such as, a transparent substrate, lens, adhesive, optical waveguide, light emitting diode (LED), phototransistor, photo diode and solid-state image sensor.

Examples

The present invention is specifically described below, but the scope of the present invention is not limited to the examples.

<Production of (A) component>

(Production example 1)

1,000 parts by weight of toluene were poured into a reaction container, and heated in a nitrogen atmosphere while stirring under the pressurized condition of 0.15MPa($1.5kgf/cm^2$) up to 140 °C, and 111 parts by weight of Composition 1 of Table 1, shown below, were uniformly dropped into the reaction container for 2 hours. After dropping Composition 1, the reaction was continued for 4 hours to produce a copolymer. The molecular ratio of (a) to (b) in the obtained copolymer was 50/50 ((a)/(b)), and the weight average molecular weight was 4,000.

Next, to 1,000 parts by weight of the copolymer, 89 parts by weight of acrylic acid (equivalent ratio of the epoxy group in the copolymer to the carboxyl group in acrylic acid is 1/0.95), 5 parts by weight of triphenylphosphine and 0.5 parts by weight of hydroquinone mono ether were added. The mixture was stirred with blowing air under normal atmospheric condition at 100 °C for 10 hours to obtain an acrylic resin having an acid value of 1.5 and a solid content of 50 % by weight.

Further, the acrylic resin solution was dropped into 10 times volume of a poor solvent (methanol:water=50:50) while stirring the mixture, and the mixture was left to stand for several hours. Then the supernatant of the mixture was removed to obtain the precipitation. Then, the obtained precipitation was solved into THF, and the obtained THF solution was dehydrated with magnesium sulfate, and filtered. The filtered solution was subject to de-solution by using an evaporator to the extent that the toluene content was 1 % by weight or less to provide purified (A) a lower molecular weight acrylic resin.

(Production examples 2 to 8)

(A) lower molecular weight acrylic resins were obtained in the same manner as Production example 1, except that the Composition 1 was replaced with one of Compositions 2 to 8 of Table 1 shown below.

[Table 1]

| Polymerizable monomer composition | Comp.1 | Comp.2 | Comp.4 | Comp.4 | Comp.5 | Comp.6 | Comp.7 | Comp.8 |
|---|---|---|---|---|---|---|---|---|
| GMA(a) | 58.7 | 58.7 | 58.7 | 37.8 | 76.8 | 37.2 | 58.7 | 58.7 |
| MMA(b) | 41.3 | 41.3 | 41.3 | 62.2 | 23.2 | 19.6 | 41.3 | 41.3 |
| FA-513M(b') | | | | | | 43.2 | | |
| Radical polymerization initiator Perhexyl D | 11.0 | 14.0 | 4.0 | 14.0 | 14.0 | 14.0 | 20.0 | 3.5 |
| (a)/(b)/(b') molar ratio | 50/50/0 | 50/50/0 | 50/50/0 | 30/70/0 | 70/30/0 | 40/30/30 | 50/50/0 | 50/50/0 |
| Weight average molecular weight Mw | 4,000 | 1,000 | 10,000 | 2,600 | 6,000 | 2,300 | 500 | 10,500 |

*The unit of all compounds is expressed by "parts by weight" in Table 1. GMA: glycidyl methacrylate LIGHT-ESTER G manufactured by Kyoeisha Chemical Co.,Ltd.
MMA: methylmethacrylate manufactured by Wako Pure Chemical Industries, Ltd.
Perhexyl D:di-t-hexylperoxide manufactured by NOF CORPORATION
FA-513M: monomethacrylate ester having a tricyclodecane structure manuractured by Hitachi Chemical Company Ltd.

<Preparation of resin composition solution>

(Example 1)

50 parts by weight of (A) low molecular weight acrylic resin obtained in Production example 1, 50 parts by weight of glycidyl methacrylate (LIGHT ESTER G manufactured by Kyoeisha Chemical Co.,Ltd.) as the (B) component, 0.5 parts by weight of lauroyl peroxide (PEROYL L manufactured by NOF CORPORATION), 0.5 parts by weight of t-butylperoxy-2-ethylhexanoate (PERBUTYL I manufactured by NOF CORPORATION) were mixed at room temperature to prepare a resin composition solution. The resin solution was poured into molds that have a silicone spacer with 1mm or 3mm thick pinched by glass boards, gradually heated at 60°C for 3 hours and 120°C for 1 hour to obtain cured materials having a thickness of 3mm or 1mm.

(Examples 2-8 and Comparative Examples 1-3)

A resin composition according to Table 2 was prepared in the same manner as Example 1 to obtain a cured material having a thickness of 3mm or 1mm.

Table 2

| | Ex. 1 | Ex.2 | Ex.3 | Ex.4 | Ex.5 | Ex.6 | Ex7. | Ex.8 | Com.Ex. 1 | Com.Ex. 2 | Com.Ex. 3 |
|---|---|---|---|---|---|---|---|---|---|---|---|
| Production Ex.1 | 50 | | | | | | 70 | 50 | | | |
| Production Ex.2 | | 50 | | | | | | | | | |

(continued)

| | Ex. 1 | Ex.2 | Ex.3 | Ex.4 | Ex.5 | Ex.6 | Ex7. | Ex.8 | Com.Ex. 1 | Com.Ex. 2 | Com.Ex. 3 |
|---|---|---|---|---|---|---|---|---|---|---|---|
| Production Ex.3 | | | 50 | | | | | | | | |
| Production Ex.4 | | | | 50 | | | | | | | |
| Production Ex.5 | | | | | 50 | | | | | | |
| Production Ex.6 | | | | | | 50 | | | | | |
| Production Ex.7 | | | | | | | | | 50 | | |
| Production Ex.8 | | | | | | | | | | 50 | |
| GMA | 50 | 50 | 50 | 50 | 50 | 50 | 30 | | 50 | 50 | |
| MMA | | | | | | | | | | | 100 |
| 1.6HX-A | | | | | | | | 50 | | | |
| LPO | 0.5 | 0.5 | 0.5 | 0.5 | 0.5 | 0.5 | 0.5 | 0.5 | 0.5 | 0.5 | 0.5 |
| PBL | 0.5 | 0.5 | 0.5 | 0.5 | 0.5 | 0.5 | 0.5 | 0.5 | 0.5 | 0.5 | 0.5 |

*The unit of all compounds is expressed by "parts by weight" in Table 2. GMA: glycidyl methacrylate LIGHT-ESTER G manufactured by Kyoeisha Chemical Co., Ltd.
MMA: methylmethacrylate, LIGHT-ESTER M manufactured by Kyoeisha Chemical Co.,Ltd.
1.6HX-A:1,6-hexanedioldiacrylate, LIGHT-ACRYLATE 1.6HX-A manufactured by Kyoeisha Chemical Co., Ltd.
LPO: Lauroylperoxide, PEROYL L manufactured by NOF CORPORATION
PBI: t-butyl peroxy-2-ethylhexanoate, PERBUTYL I manufactured by NOF CORPORATION

<Evaluation of cured material>

Mechanical properties (degree of contraction, glass transition temperature, bending strength) and optical properties (light transmission, degree of yellowing) of the cured material obtained in the above Examples and Comparative Examples were determined.

The degree of contraction ($\Delta V$) was calculated by inserting the specific gravities of the resin composition($\rho_m$) and the cured material ($\rho_p$) into the formula (1) shown below. The specific gravities of the resin composition and the cured material are determined by Archimedes method with an electronic densimeter (SD-200L manufactured by alfa mirage co. Ltd.).

$$[\text{Formula 1}]$$

$$\Delta V \ (\%) = \frac{100(\rho_p - \rho_m)}{\rho_p} \qquad \text{Formula (1)}$$

With respect to the glass transition temperature (Tg), a test specimen of 3mmX3mmX20mm was cut from a cured material having a thickness of 3mm. Then, Tg was determined by using a differential thermomechanical analyzer (TAS 100 manufactured by Rigaku corporation). The thermal expansion of the specimen was determined under a condition of elevating temperature of 5°C /min, and the Tg was obtained from the folding point of the thermal expansion curve.

With respect to the bending strength, a test specimen of 3mmx20mmx50mm was cut. Then, a bending test was conducted in accordance with JIS-K-6911 in which three points were supported, by using three points bending test instruments (5548 manufactured by INSTRON), and bending strength was calculated by the formula (2) shown below. The distance between supporting points was 24mm, the movement speed of a cross head was 0.5mm/min, and the temperatures were room temperature and 250°C, which is close to the reflow temperature when a semiconductor is packaged.

[Formula 2]

$$\sigma fB = \frac{3L}{2Wh}P' \qquad \text{Formula 2}$$

σfB:bending strength (MPa), P':load when the test specimen is broken (N), L:distance between supporting points, W:width of the test specimen, and h:thickness of the test specimen.

Tests for light transmission and the degree of yellowing were conducted on a test specimen having a thickness of 1 mm. The tests were conducted with a spectrophotometer (Hitachi spectrophotometer V-3310). The light transmission of the specimen was determined at a time beginning after curing, and for the heat resist de-coloration test, after a specimen was left for 72 hours at a temperature as high as 150°C. A Yellow Index (YI), showing a yellowish color, was determined by obtaining tristimulus value XYZ in the case of a standard light source C by using a determined transmission spectrum, and inserting the values into the following formula (3).

[Formula 3]

$$YI = \frac{100(1.28X - 1.06Z)}{Y} \qquad \text{Formula 3}$$

Table 3 shows mechanical properties, that is, degree of contraction, glass transition temperature, bending strength at a room temperature (25°C) and 250°C, and optical properties, that is, light transmission at a time beginning after curing and after the specimen is left at a high temperature, degree of yellowing of the cured material obtained by the above Examples and Comparative Examples.

[Table 3]

| Table 3 | | Ex.1 | Ex.2 | Ex.3 | Ex.4 | Ex.5 | Ex.6 | Ex.7 | Ex.8 | Com.Ex.1 | Com.Ex.2 | Com.Ex.3 |
|---|---|---|---|---|---|---|---|---|---|---|---|---|
| Degree of contraction(%) | | 9.0 | 9.1 | 8.8 | 9.0 | 9.1 | 8.8 | 7.2 | 7.4 | 9.1 | ** | 20.2 |
| Glass transition temp.(°C) | | 122 | 158 | 157 | 160 | 154 | 153 | 135 | 146 | 156 | | 104 |
| Bending strength | Room temp. | 82 | 75 | 45 | 20 | 77 | 30 | 22 | 42 | 32 | | 100 |
| | 250°C | 2.2 | 2.5 | 1.1 | 1.7 | 3.3 | 1.2 | 1.3 | 7.2 | 0.5 | | *** |
| Light transmission rate(%) | Beginning after curing | 86 | 88 | 80 | 88 | 80 | 89 | 82 | 89 | 75 | | 92 |
| | After leaving at high temp. | 76 | 81 | 75 | 84 | 75 | 82 | 76 | 81 | 60 | | 86 |
| Yellowing | Beginning after curing | 2.5 | 1.8 | 2.1 | 1.2 | 2.2 | 1.3 | 2.2 | 1.4 | 4.2 | | 0.5 |
| | After leaving at high temp. | 4.9 | 3.4 | 4.2 | 1.9 | 4.5 | 2.8 | 4.3 | 3.9 | 11.5 | | 1.8 |

** The (A)acrylic resin was not compatible with the (B).
*** The value could not be evaluated.

EP 1 985 640 A1

According to Table 3, the cured materials of Examples 1 to 8 are superior in heat resistance, that is, a glass transition temperature of 120 °C or more, and bending strength at high temperature, that is, as high as 1.1 MPa or more. Further, with respect to the optical properties, it is understood that the optical transmissions are high and the variations in degree of yellowing are small initially, the decrease of optical transmissions is small, and the yellowing is insubstantial after the cured materials were left at a high temperature. On the other hand, it is understood that the copolymer having a weight average molecular weight of less than 10,000, as shown in Comparative example 1, is inferior in optical transmission and strength at a high temperature, and has a substantial degree of yellowing. Further, it is difficult to make a copolymer having a weight average molecular weight of more than 10,000 compatible with the (B) component, and a curing material could not be obtained.

**Claims**

1.   A heat or photo curable resin composition comprising:

    (A) a low molecular weight acrylic resin obtained by carrying out a polymerization of (a) an epoxy group-containing (meth)acrylate and (b) an unsaturated compound having one polymerizable unsaturated bond in the molecule to obtain a copolymer having a weightaverage molecular weight of 1,000 to 10,000, and then reacting the copolymer with (c) an unsaturated carboxyl acid;
    (B) a heat or photo-polymerizable monomer having at least one heat or photo curable unsaturated double bond in the molecule; and
    (C) a radical polymerization initiator.

2.   The resin composition of claim 1, wherein a molar ratio of the (a) component to the (b) component in the copolymer is 10-70% by mole:30-90 % by mole ((a) component: (b) component)).

3.   The resin composition of claim 1 or 2, wherein an equivalent ratio of an epoxy group of the copolymer to a carboxyl group of the unsaturated carboxyl acid (epoxy group/carboxyl group) is in the range of 0.95-1.1 in the low molecular weight acrylic resin.

4.   The resin composition of any one of claims 1 to 3, wherein the (a) epoxy group- containing (meth)acrylate includes glycidyl(meth)acrylate.

5.   An optical material, which is obtained by curing the resin composition of any one of claims 1 to 4.

<div align="center">

**INTERNATIONAL SEARCH REPORT**

</div>

| | International application No. |
|---|---|
| | PCT/JP2007/050804 |

A. CLASSIFICATION OF SUBJECT MATTER
*C08F290/12*(2006.01)i, *G02B1/04*(2006.01)i

According to International Patent Classification (IPC) or to both national classification and IPC

B. FIELDS SEARCHED

Minimum documentation searched (classification system followed by classification symbols)
C08F290/12, G02B1/04

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-209443 A  (Toagosei Co., Ltd.), 03 August, 1999 (03.08.99), Claims; examples (Family: none) | 1-5 |
| X | JP 63-81301 A  (Asahi Chemical Industry Co., Ltd.), 12 April, 1988 (12.04.88), Claims; examples (Family: none) | 1-5 |
| X | JP 8-225708 A  (Elf Atochem S.A.), 03 September, 1996 (03.09.96), Claims; examples & US 5728749 A1          & EP 714916 A1 & FR 2727424 A1          & CA 2164047 A & CN 1133848 A          & CZ 9503176 A | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 April, 2007 (10.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/050804

C (Continuation). DOCUMENTS CONSIDERED TO BE RELEVANT

| Category* | Citation of document, with indication, where appropriate, of the relevant passages | Relevant to claim No. |
|---|---|---|
| X | JP 4-366178 A (Hitachi Chemical Co., Ltd.), 18 December, 1992 (18.12.92), Claims; examples (Family: none) | 1-4 |
| X | JP 2004-123780 A (Dainippon Ink And Chemicals, Inc.), 22 April, 2004 (22.04.04), Claims; examples (Family: none) | 1-4 |
| X | JP 2002-302522 A (Hitachi Chemical Co., Ltd.), 18 October, 2002 (18.10.02), Claims; examples (Family: none) | 1-4 |
| X | JP 10-204327 A (Kansai Paint Co., Ltd.), 04 August, 1998 (04.08.98), Claims; examples (Family: none) | 1-4 |
| X | JP 10-204326 A (Kansai Paint Co., Ltd.), 04 August, 1998 (04.08.98), Claims; examples (Family: none) | 1-4 |
| X | JP 58-118873 A (Hitachi Chemical Co., Ltd.), 15 July, 1983 (15.07.83), Claims; examples (Family: none) | 1-4 |
| X | JP 11-100418 A (Hitachi Chemical Co., Ltd.), 13 April, 1999 (13.04.99), Claims (Family: none) | 1-4 |
| A | JP 4-91152 A (Mitsui Toatsu Chemicals, Inc.), 24 March, 1992 (24.03.92), Claims; examples (Family: none) | 1-5 |

Form PCT/ISA/210 (continuation of second sheet) (April 2005)

**EP 1 985 640 A1**

## REFERENCES CITED IN THE DESCRIPTION

### Patent documents cited in the description

- JP 2003171439 A
- JP 2004075894 A
- JP 2004002810 A
- JP 2006013038 A